# FASCICULE DE BREVET EUROPEEN

(11) **EP 2 548 293 B1**
(45) Date de publication et mention de la délivrance du brevet: **18.09.2019**
(21) Numéro de dépôt: 11709378.1
(22) Date de dépôt: 17.03.2011
(51) Int. Cl.: H02K 1/18, H02K 21/14, H02K 3/47, H02K 16/02, H02K 21/22, H02K 1/14, H02K 1/27

(54) **MOTEUR ÉLECTRIQUE À AIMANTS PERMANENTS COMPORTANT UN STATOR FRACTIONNÉ**
ELEKTRISCHER PERMANENTMAGNETMOTOR MIT EINEM SEGMENTIERTEN STATOR
PERMANENT-MAGNET ELECTRIC MOTOR COMPRISING A SEGMENTED STATOR

(30) Priorité: 19.03.2010 FR 1052002
(43) Date de publication de la demande: 23.01.2013
(73) Titulaire: Airbus Defence and Space SAS, 31402 Toulouse Cedex 4 (FR)
(72) Inventeur: SPERANDEI, Jean, F-31400 Toulouse (FR); PUPILLE, Gilles, F-31820 Pibrac (FR)
(74) Mandataire: Ipside
(86) Numéro de dépôt international: PCT/EP2011/054024
(87) Numéro de publication internationale: WO 2011/113887

(56) Documents cités:
- WO-A2-2005/089327
- DE-A1- 3 715 123
- FR-A1- 2 852 162
- FR-A1- 2 926 935
- JP-A- 2002 027 781
- US-A1- 2004 187 963

## Description

La présente invention appartient au domaine des moteurs électriques.

Plus particulièrement l'invention concerne un moteur électrique à aimants permanents de précision et à haut rendement, capable de délivrer des couples élevés dans des conditions extrêmes de fonctionnement ne permettant pas de réaliser un refroidissement suffisamment efficace des éléments du moteur par convection.

La technologie et les principes de fonctionnement des moteurs à aimants permanents sont bien connus et ces moteurs présentent l'avantage principal de ne pas utiliser de contacts électriques tournant lorsque seul le stator est porteur de bobines d'induction magnétique, ce qui a conduit à une utilisation large de ces types de moteurs, en particulier lorsque les commutations nécessaires de courants dans les bobinages ont pu être réalisées au moyen de commutateurs statiques pilotés par une électronique de contrôle.

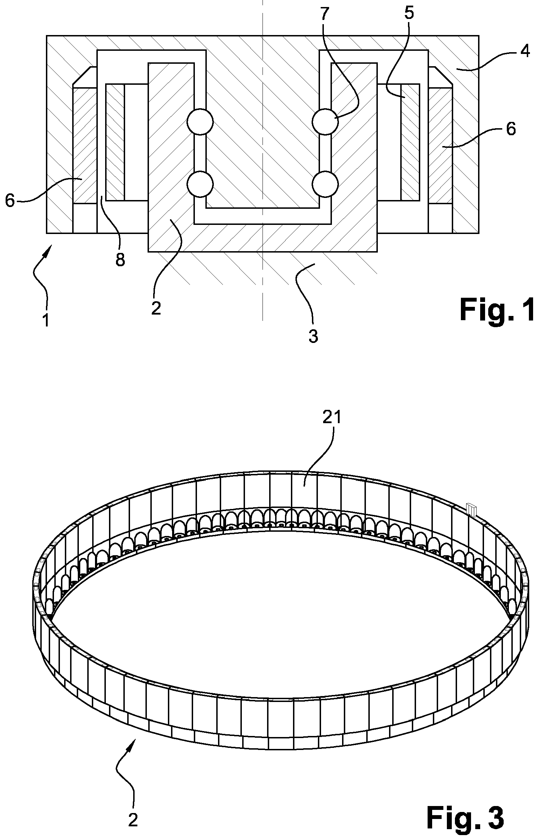

Comme l'illustre le dessin de la figure 1 qui représente une section d'un moteur connu du type à aimants permanents, le moteur 1 comporte un stator 2, fixée sur une structure support 3, sur lequel sont fixés les bobinages 5 qui génèrent un champ magnétique tournant et un rotor 4 sur lequel sont fixés les aimants permanents 6 entraînés par le champ magnétique tournant du stator.

Pour induire un champ magnétique du stator 2 tournant, le courant dans chaque bobine est lui-même commuté, en fonction de la position du rotor 4 afin de créer le couple du moteur 1, par des moyens connus non représentés.

Ce type de moteur aujourd'hui très utilisé présente cependant des contraintes de réalisation lorsque des performances élevées de couple, de vitesse de rotation, de rendement, de précision ... sont recherchées et d'autant plus que les conditions de fonctionnement du moteur sont sévères.

Une première contrainte de ces moteurs est de réaliser des espaces entre les parties tournantes et les parties fixes aussi faibles que possible pour diminuer les entrefers 8, pouvant être inférieurs au millimètre, et maximiser les champs magnétiques utiles, en évitant tout contact mécanique entre le rotor 4 et le stator 2.

Une seconde contrainte est de limiter les pertes d'énergie dans le moteur liées à son fonctionnement.

Les pertes d'énergie par frottement sont limitées par l'usage de paliers ou roulements 7 adaptés à la charge du moteur.

Les pertes d'énergie par effet Joule dans les conducteurs des enroulements sont limitées par l'utilisation d'un matériau bon conducteur électrique le plus souvent du cuivre ou, bien que moins bon conducteur électrique, l'aluminium lorsque la masse du moteur doit être diminuée.

En outre le champ magnétique d'une bobine et le champ créé par les aimants permanents du rotor, en rotation par rapport au stator, étant variables en fonction du temps en un point donné du stator, ces champs magnétiques génèrent dans les éléments conducteurs qu'ils traversent des courants induits, les courants de Foucault, et du fait de la résistance électrique propre de ces matériaux conducteurs absorbent de l'énergie restituée sous forme de chaleur par effet Joule.

Ces différentes sources de perte d'énergie ont pour effet d'augmenter la température du moteur en fonctionnement, augmentation de température qui, outre les effets de dilatation différentielle des matériaux entrant dans la structure du moteur qui modifient la valeur de l'entrefer 8 et sont susceptibles d'engendrer des déformations de la structure du moteur, modifie les performances magnétiques des aimants permanents, leurs magnétisations diminuant lorsque la température augmente.

Les effets de cette perte de magnétisation des aimants sont d'autant plus dommageables que les aimants les plus performants sont également ceux qui sont les plus sensibles à cet effet de la température et présentent une température maximale de fonctionnement relativement basse, très inférieure à la température de Curie, par exemple pour les aimants dopés au néodyme des températures maximales de fonctionnement de l'ordre de 380 Kelvin.

Pour lutter contre ces effets de l'augmentation de la température, il est connu de rechercher un refroidissement amélioré du moteur en fonctionnement.

Dans des conditions ordinaires de fonctionnement, le choix de noyaux métalliques, bons conducteurs de la chaleur, pour les bobines, solution mécaniquement résistante et économique, associée à une ventilation forcée du moteur permet d'assurer une évacuation suffisante de l'énergie thermique dissipée par les bobines et dans les noyaux métalliques pour limiter la température en fonctionnement.

Il est également connu, pour éviter à la fois les pertes d'énergies par courant de Foucault et l'échauffement correspondant, d'utiliser un matériau non conducteur électrique pour réaliser les noyaux des bobines, en particulier un matériau de synthèse à base de résine. Cependant les performances mécaniques de telles résines sont limitées et leurs coefficients de dilatation sont généralement différents de ceux des parties métalliques du moteur ce qui conduit à des déformations des noyaux lors de l'élévation de température du moteur qui ne sont pas acceptables dans le cas des moteurs de performances élevées.

Une solution présentée dans le brevet US 3974406 consiste à utiliser une céramique électriquement isolante et amagnétique pour réaliser le noyau des bobines du stator.

De telles céramiques amagnétiques et non conductrices électriquement, d'une résistivité supérieure à 10^5 Ohms.m, permettent, comme les matériaux de synthèse à base de résine, d'éviter les pertes par courant de Foucault ce qui améliore le rendement du moteur et en limite l'échauffement.

Cependant les céramiques présentent un coefficient de dilatation faible très différent de celui des matériaux métalliques mis en oeuvre pour les autres parties du moteur et ne sont pas ductiles pour se déformer comme dans le cas de l'utilisation de résines de synthèse ce qui en limite l'usage à des moteurs de dimensions réduites au risque sinon de détériorer la structure du moteur sous l'effet des dilatations différentielles.

Le document FR-A-2 926 935 divulgue un moteur électrique à aimants permanents comportant un rotor 3 sur lequel sont fixés des aimants permanents et comportant un stator 2, ledit stator comportant une structure de stator et des bobines 10 agencées sur ladite structure de stator, dans lequel la structure du stator est fractionnée en un ensemble d'au moins trois éléments de stator juxtaposés. Suivant le document FR-A-2 926 935 il est également prévu que chaque élément de stator 5 soit fixé sur une embase 4 par un seul élément de fixation 13 - 14 et sans liaison mécanique directe entre les éléments de stator (les numéros de référence indiqués ci dessus se rapportent au document FR-A-2 926 935).

Le document FR-A-2 852 162 décrit également un moteur à stator fractionné.

En raison des limitations et des contraintes imposées par les solutions connues, il est particulièrement difficile de réaliser des moteurs aptes à délivrer un couple élevé au moyen de moteurs électriques à haut rendement mettant en oeuvre des aimants permanents dès lors que les conditions de fonctionnement ne permettent pas d'adjoindre des moyens de refroidissement actifs, par exemple par convection forcée, ou que de tels moyens de refroidissement ne sont pas souhaitables.

De telles conditions se rencontrent en particulier dans le vide où le refroidissement ne peut pas être assuré par un flux d'air ou encore dans les moteurs assemblés de manière étanche pour être protégés d'un environnement agressif : terre, poussières, boues ...

Afin de palier ces difficultés, l'invention propose un moteur électrique à aimants permanents comportant un rotor sur lequel sont fixés des aimants permanents et comportant un stator comportant lui-même une structure de stator et des bobines agencées sur cette structure de stator. La structure de stator est fractionnée en un ensemble de plusieurs éléments de stator, au moins trois éléments, en matériau électriquement non conducteur ou faiblement conducteur juxtaposés assemblés sur une embase et sans liaison mécanique directe des différents éléments de stator entre eux. Ainsi le fractionnement du stator en trois ou plus éléments de stator indépendants permet de fixer le stator sur l'embase avec un nombre de fixations suffisantes réparties sur les différents éléments pour garantir la tenue mécanique du stator tout en autorisant des déplacements relatifs entre ces éléments, ce qui permet de réaliser un stator de dimensions importantes, en particulier en longueur du stator, c'est à dire suivant son périmètre pour un stator en couronne et permet de réaliser un moteur alimenté en courant triphasé ce qui permet de réduire les ondulations de couple du moteur.

En pratique chaque élément de stator est réalisé avec une longueur suivant le périmètre du stator inférieure à une longueur au-delà de laquelle les dilatations différentielles entre l'élément de stator et l'embase à laquelle il est fixé, compte tenu du matériau de l'élément de stator et du matériau de l'embase et sous l'effet des différentes températures internes acceptées pour le moteur en fonctionnement, ainsi que des niveaux de vibrations et de chocs, conduiraient à des déformations du stator et ou de l'embase ou à des contraintes mécaniques dans les différentes parties du moteur non acceptables, c'est-à-dire incompatibles non seulement avec le fonctionnement du moteur mais également avec ses performances et sa durée de vie opérationnelle.

Le choix des dimensions des éléments de stator pour éviter l'apparition de déformations ou de contraintes dans la structure du moteur permet ainsi d'en assurer une durée de vie opérationnelle et des performances améliorées par l'absence de déformation sensible malgré les échauffements inévitables de la structure du moteur et les niveaux de vibration et de chocs subis lors du fonctionnement.

Avantageusement, les éléments de stator sont fixés sur l'embase, par exemple une embase métallique, avec un jeu entre éléments de stator voisins choisi pour rester positif ou nul quelle que soit la température interne acceptée du moteur en fonctionnement, de sorte à éviter l'introduction dans un élément de stator par un élément voisin de contraintes mécaniques lors de la dilatation différentielle entre l'embase et les éléments de stator.

Pour éviter que des efforts soient introduits entre un élément de stator et l'embase sur laquelle il est fixé et ainsi que chaque élément de stator reste sans contrainte sensible du fait des dilatations différentielles entre l'élément de stator et l'embase, chaque élément de stator est fixé sur l'embase par un seul élément de fixation, une vis par exemple, autorisant ainsi la dilatation différentielle dudit élément par rapport à l'embase sans que l'élément de stator se trouve mis en contrainte comme il le serait en étant fixé par deux ou plusieurs fixations. Avantageusement, au moins un élément anti-rotation, par exemple un pion, s'opposant à la rotation de l'élément de stator autour de la fixation unique de l'élément est utilisé pour empêcher la rotation dudit élément lors de son montage sur l'embase. Cet élément anti-rotation peut éventuellement être enlevé après montage et lorsqu'il reste en place dans le moteur après assemblage du stator, il est agencé avec l'élément de stator de telle sorte qu'il n'introduit pas de contrainte dans l'élément de stator du fait de la dilatation différentielle entre le stator et l'embase sur laquelle est fixé cet élément de stator.

Pour porter les bobinages du stator, chaque élément de stator comporte au moins une zone de bobinage du côté d'une extrémité libre dudit élément de stator et un pied de fixation, du côté d'une extrémité de l'élément de stator opposée à l'extrémité libre, par lequel l'élément de stator est fixé à l'embase.

Suivant l'invention le pied de fixation présente une surface d'appui élargie, par rapport à une section de la zone de bobinage en contact avec l'embase pour une résistance mécanique améliorée et pour présenter une surface de contact avec l'embase favorisant les échanges thermiques et l'évacuation de la chaleur produite par effet joule dans les bobinages du stator et le cas échéant par les courants de Foucault circulant dans les éléments de stator.

Avantageusement pour maintenir les fils du bobinage du stator, la zone de bobinage comporte un évidement autour d'un noyau sur lequel les fils du bobinage prennent appui.

De préférence pour offrir un volume augmenté au niveau des chignons du bobinage et permettre de maintenir et de protéger les fils au niveau de ces chignons, l'évidement est de largeur plus importante suivant la direction radiale du stator sur le bord supérieur, du côté de l'extrémité libre de l'élément de stator, et sur le bord inférieur, du côté du pied de fixation, que sur les bords latéraux de la zone de bobinage.

Pour que l'énergie rayonnée sous forme thermique par le bobinage du stator ne soit pas, au moins en partie, rayonnée vers les aimants du rotor, au moins un voile de l'élément de stator borde l'évidement de chaque zone de bobinage, au moins sur certains des côtés de l'évidement de sorte à former un écran thermique anti-radiatif entre les bobinages et une couronne d'aimants du rotor.

Dans une forme particulière de réalisation, avantageuse lorsque des aimants du rotor sont situés de chaque côté du stator, l'évidement est réalisé sous la forme d'une gorge, au moins sur un bord de la zone de bobinage, bordée par des voiles sur chacun des côtés de la gorge de part et d'autre des bobines.

Pour la réalisation des bobines et la mise en place des fils des bobines, avantageusement sur au moins une des faces intérieure, du côté de l'axe 9 du moteur, ou extérieure, du côté opposé à l'axe du moteur, du stator, un espace entre deux éléments de stator immédiatement voisins est de largeur au moins égale à un diamètre des fils des bobines agencées sur la structure du stator, en pratique de largeur juste suffisante pour permettre l'insertion des fils.

De préférence, pour limiter la génération de courants de Foucault et pour évacuer par conduction thermique vers l'embase et la structure environnante la chaleur produite par effet joule dans les fils des bobines, le matériau dans lequel sont réalisés les éléments de stator est un matériau bon conducteur thermique et également électriquement non conducteur ou faiblement conducteur, typiquement d'une résistivité électrique égale ou supérieure à 10^5 Ohms.m. Dans un mode préféré de réalisation du moteur, mais non revendiqué le matériau des éléments de stator est un matériau céramique et de préférence un matériau céramique sélectionné parmi les matériaux céramiques ayant une conduction thermique égale ou supérieure à 80 W/m.K tel qu'un nitrure d'aluminium et de bore. De façon avantageuse mais non revendiquée le matériau céramique des éléments de stator est un nitrure d'aluminium de conduction thermique supérieur à 150 W/m.K .

Dans un mode de réalisation du moteur de l'invention, le stator est fractionné en éléments de stator qui comportent chacun une zone de bobinage unique.

Ainsi le stator comporte un nombre d'éléments de stator qui peut être élevé et correspond dans ce cas au nombre de pas du moteur, qui serait mis en oeuvre comme un moteur pas à pas, sans conduire à des éléments de stator de dimensions trop petites pour que le stator soit assemblé sans difficultés particulières.

Avantageusement les éléments de stator sont de forme géométrique similaire et, si aucune contrainte du moteur ne justifie que des éléments de stator soient différents entre eux, les éléments de stator sont géométriquement identiques pour faciliter le processus de fabrication de ces éléments de stator et de leur assemblage.

Avantageusement les aimants permanents du rotor sont des aimants dopés au néodyme que la mise en oeuvre de l'invention permet en évitant un échauffement excessif de ces aimants lié au fonctionnement du moteur.

Dans une forme de réalisation pour obtenir un couple élevé du moteur, le rotor est pourvu de deux rangées d'aimants permanents entre lesquelles rangées est maintenu le stator.

Dans une forme de réalisation simplifiée lorsqu'un couple moins élevé est recherché, le rotor est pourvu d'une rangée d'aimants permanents et d'un voile en fer doux entre lesquels rangée et voile est maintenu le stator.

Avantageusement pour limiter l'échauffement des aimants par le rayonnement thermique des bobinages qui n'aurait pas été arrêté par d'autres moyens, les faces des aimants permanents tournées vers les bobinages sont recouvertes d'un revêtement réflecteur des radiations thermiques.

Un moteur mettant en oeuvre les principes de l'invention permet un fonctionnement sans refroidissement actif ou dans le vide avec une température intérieure inférieure à 380 K au niveau des aimants permanents.

La description de l'invention est faite en référence aux figures qui illustrent schématiquement et de manière non limitative :
- figure 1 : déjà citée, une section d'un moteur à aimants permanents suivant l'art antérieur ;
- figure 2a : une section partielle suivant un plan axial BB d'un moteur suivant l'invention ;
- figure 2b : une section suivant un plan AA perpendiculaire à l'axe de rotation du moteur de la figure 2a ;
- figure 3 : une vue en perspective de la structure du rotor d'un moteur suivant l'invention ;
- figures 4a et 4b : des vues en perspective donnant des détails d'une partie du rotor de la figure 3 vue depuis l'intérieur du rotor, figure 4a, et vue depuis l'extérieur, figure 4b ;
- figures 4c et 4d : en vue de profil des exemples d'éléments constituant un rotor ;
- figure 5 : une vue en perspective d'un élément de rotor comportant deux noyaux de bobinage ;
- figure 6a : une section partielle de l'ensemble rotor et stator, développé dans un mode de réalisation avec un rotor à un seul ensemble d'aimants permanents ;
- figure 6b : en vue de profil un élément de rotor du moteur de la figue 6a.

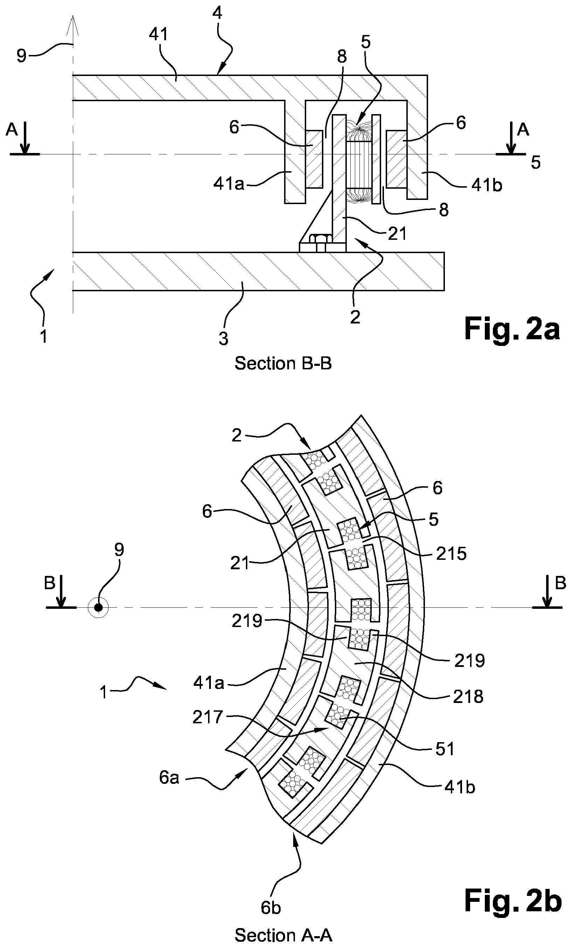

L'invention est décrite de manière détaillée dans le cas d'un moteur électrique rotatif à aimants permanents comportant deux rangées d'aimants fixés au rotor. Un tel moteur, comme illustré sur les sections des figures 2a et 2b, comporte :
- un stator 2 portant des bobines 5 et présentant géométriquement une symétrie de révolution autour d'un axe 9 confondu avec un axe de rotation du moteur ;
- un rotor 4 portant des aimants permanents 6, d'axe de symétrie de révolution confondu avec l'axe 9 de symétrie de révolution du stator et de rotation du moteur.

Le stator 2 est fixé sur une embase 3 qui assure un positionnement précis dudit stator et reprend les efforts appliqués au stator lors du fonctionnement du moteur.

Le stator 2 forme une couronne régulière de révolution.

L'embase 3 permet de solidariser le moteur 1 avec une structure support, non représentée.

Le rotor 4 est monté mobile en rotation autour de l'axe 9, par exemple par l'intermédiaire d'un arbre, non représenté, solidaire de l'embase 3 et de paliers ou de roulements, non représentés, de sorte que ledit rotor est maintenu centré par rapport au stator 2 en restant libre en rotation avec le minimum de frottements mécaniques.

Sur le rotor 4 sont fixés, dans l'exemple de réalisation décrit, deux rangées d'aimants permanents formant une première couronne de révolution 6a, dite couronne d'aimants intérieure, et une seconde couronne de révolution 6b, dite couronne d'aimants extérieure, sur laquelle les aimants sont agencés à une distance de l'axe de rotation 9 supérieure à celle à laquelle sont agencés les aimants de la couronne intérieure 6a.

Les deux couronnes d'aimants intérieure 6a et extérieure 6b sont agencées de telle façon qu'un espace de largeur sensiblement constant est formé entre les deux couronnes, espace dans lequel se trouve le stator 2.

Dans le rotor 4, les aimants 6 des deux couronnes sont maintenus par une structure du rotor dont la rigidité et la résistance mécanique sont adaptées à la vitesse de rotation possible du rotor et aux efforts, en particulier de couple et d'accélération centrifuge, qui doivent être transmis.

Notamment, la résistance et la rigidité de la structure du rotor 4 sont telles qu'aucune déformation pendant le fonctionnement du moteur ne conduise à un contact mécanique entre les aimants 6 des couronnes intérieure 6a et extérieure 6b, et de toutes les parties du rotor en général, avec le stator 2 et conserve une valeur admissible d'un "entrefer" 8 entre le stator 2 et le rotor 4. Les aimants sont par exemple fixés à des parties structurales métalliques saillantes 41a, 41b, d'une structure principale 41 du rotor.

La structure du stator 2 est réalisée par un ensemble d'éléments 21, au moins trois éléments de stator 21 de sorte que lors de la dilatation différentielle avec l'embase 3 lesdits éléments de stator s'approchent ou s'éloignent radialement par rapport à l'axe 9 de manière homogène en maintenant une forme sensiblement circulaire de la couronne du stator, mécaniquement indépendants les uns des autres, c'est à dire sans liaison mécanique directe entre eux, juxtaposés et assemblés sur l'embase 3 de sorte à former la couronne du rotor telle que la couronne illustrée sur la figure 3.

On comprendra que les fils des bobines 5 du stator ne sont pas considérées ici comme des liaisons mécaniques entre les éléments de stator, leur fonction et leur structure ne formant pas en pratique une liaison mécanique ayant la stabilité et la précision d'un assemblage mécanique.

Une face intérieure de la couronne du stator 2 se trouve ainsi en vis à vis des aimants de la couronne intérieure 6a du rotor et une face extérieure du stator 2 se trouve en vis à vis des aimants de la couronne extérieure 6b du rotor.

Chaque élément 21 est réalisé dans un matériau de préférence électriquement non conducteur ou faiblement conducteur, c'est à dire d'une résistivité électrique supérieure à 10^5 Ohms.m, et en outre sélectionné parmi les matériaux bon conducteur de la chaleur, c'est à dire ici de conductivité thermique égale ou supérieure à 80 W/m.K.

Le matériau des éléments 21 est par exemple une céramique telle qu'une alumine ou un nitrure d'aluminium et de bore qui a l'avantage de présenter l'ensemble de ces caractéristiques et dont la conductivité thermique est de l'ordre de 80 W/m.K.

En particulier, si les exigences de fonctionnement du moteur nécessitent une évacuation de chaleur importante, la céramique est par exemple un nitrure d'aluminium dont la conductivité thermique est supérieure à 150 W/m.K, de l'ordre de 180 W/m.K.

Le choix d'un matériau présentant ces caractéristiques permet d'une part d'éviter des pertes d'énergies dans le stator et des élévations de la température de fonctionnement du moteur en raison de courants de Foucault qui seraient induits dans un matériau électriquement conducteur, et permet d'autre part d'évacuer par conduction la chaleur générée par effet joule dans les bobines 5 du stator vers l'embase 3 agissant avec la structure environnante comme un puits de chaleur, chaleur qui est ensuite évacuée par exemple par rayonnement ou par un circuit de refroidissement.

Le nombre d'éléments 21, au moins trois mais pouvant atteindre plusieurs centaines suivant les dimensions du moteur, formant la couronne du stator 2 est déterminé pour que la dilatation différentielle maximale en fonctionnement du moteur entre l'embase 3 et les éléments 21, sous l'effet des variations de température auxquelles peut être soumis le moteur en fonctionnement, n'introduise pas de déformation sensible de l'ensemble formé par l'embase 3 et le stator 2 et ne génère pas un risque d'endommagement d'un élément de stator 21 ou de l'embase.

Ce nombre minimal de trois éléments 21 de stator permet de limiter les ondulations de couple en alimentant le moteur en courant triphasé et assure une variation sensiblement homogène dans toutes les directions radiales du moteur lorsque l'embase est soumise à des variations de dimensions, auxquelles ne sont pas soumis les éléments de stator, sous l'effet des variations de températures en fonctionnement du moteur.

Cette contrainte introduit en pratique une dimension maximale acceptable pour les éléments 21 d'un moteur.

Les éléments 21 formant la structure du stator sont avantageusement géométriquement similaires, au moins pour un profil suivant une section radiale du moteur, pour former une couronne telle que la couronne illustrée sur la figure 3.

Avantageusement, si aucune fonction locale particulière ne doit être attribuée à un ou des éléments de stator particuliers, tous les dits éléments sont identiques comme dans l'exemple illustré sur la figure 3, au moins par soucis de simplification des processus industriels de fabrication.

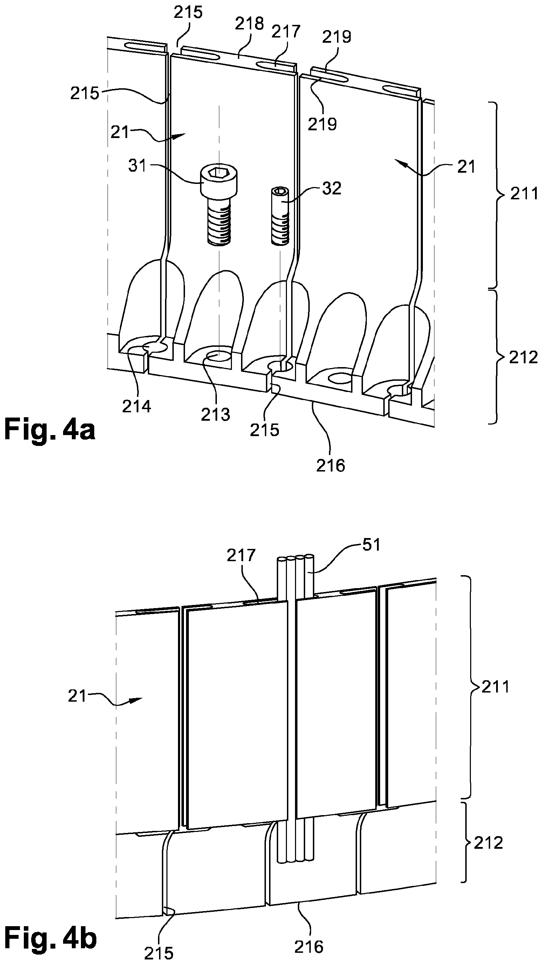

Comme illustré sur les figures 4a et 4b, un élément de stator 21 comporte une zone de bobinage 211 du côté d'une première extrémité, dite extrémité libre, de l'élément de stator et un pied 212, situé à une extrémité de l'élément de stator 21 opposée à l'extrémité libre, par laquelle ledit élément est fixé à l'embase 3.

Le pied 212 comporte un alésage 213 traversé par un élément de fixation 31 tel qu'une vis ou un axe ajusté qui assure à l'élément de rotor 21 une position précise sur l'embase 3.

Chaque élément de stator 21 comporte un et un seul élément de fixation 31 de sorte que le maintien de l'élément de stator sur l'embase 3 n'est assuré que par cet unique élément de fixation.

Cette caractéristique du moteur introduit une contrainte dans les dimensions des éléments de stator 21 en ce sens qu'un élément de stator doit être parfaitement fixé par un seul élément de fixation en présences des forces diverses (inertie, réaction du rotor...) qui s'appliquent audit élément de stator, ce qui en limite les dimensions maximales déjà limitées par ailleurs comme expliqué précédemment et nécessite un minimum de trois éléments de stator, mais également des dimensions minimales pour que l'élément de fixation nécessaire puisse être mis en place.

Le pied 212 d'un élément de stator 21 comporte également, de préférence mais non nécessairement, outre l'unique élément de fixation 31, au moins une ouverture 214 qui coopère avec un élément anti-rotation 32, par exemple une vis ou un pion, afin d'interdire à l'élément de stator 21 de tourner autour d'un axe de l'élément de fixation 31 traversant l'alésage 213.

L'élément anti-rotation 32 est utilisé notamment pendant les opérations d'assemblage du stator 2 et est retiré lorsque le stator est assemblé ou laissé en place.

Dans ce dernier cas, l'ouverture 214 et l'élément anti-rotation 32 présentent entre eux un jeu, suivant une direction pion/fixation, suffisant pour permettre la dilatation différentielle entre l'embase 3, sur laquelle se reprennent les éléments de fixation et anti-rotation, et l'élément de stator 21.

Dans l'exemple de réalisation illustré sur la figure 4a, chaque élément de stator 21 comporte deux ouvertures 214 agencées de sorte que l'élément anti-rotation mis en oeuvre pour une ouverture est également utilisé pour l'élément de stator immédiatement voisin.

En outre les dimensions, suivant un périmètre de la couronne du stator 2, des éléments de stator 21 sont déterminées pour que, le stator étant assemblé sur l'embase 3, un jeu 215 soit maintenu, quelle que soit la température interne acceptée du moteur et en prenant en compte les niveaux de vibrations et de chocs auxquels le moteur risque d'être soumis au cours de son fonctionnement, à une valeur positive ou nulle entre deux éléments de stator voisins malgré la dilatation différente entre les éléments de stator et l'embase, par exemple en alliage d'aluminium.

Dans le cas illustré sur l'exemple de la figure 4a, l'ouverture 214 d'un élément de stator 21 forme avec l'ouverture de l'élément de stator immédiatement voisin un trou en deux demi-parties écartées du jeu 215 entre les dits éléments de stator de sorte que, lorsque les conditions de température sont telles que le jeu 215 devient nul, le trou correspond à un alésage adapté au moins au diamètre de l'élément anti-rotation utilisé.

Dans une forme suivant l'invention et illustrée sur la figure 4a, le pied 212 est élargi suivant la direction radiale du stator 2 de sorte à améliorer la résistance mécanique de la liaison entre les éléments de stator 21 et l'embase 3 et de sorte à présenter au niveau d'une semelle de pose 216 une surface de contact augmentée, comparativement à une surface d'une section de la zone de bobinage 211, avec l'embase 3 favorisant les échanges thermiques entre le stator 2 et ladite structure porteuse et donc favorisant l'évacuation de l'énergie dissipée sous forme thermique par effet joule dans les bobinages du stator et les éléments de stator.

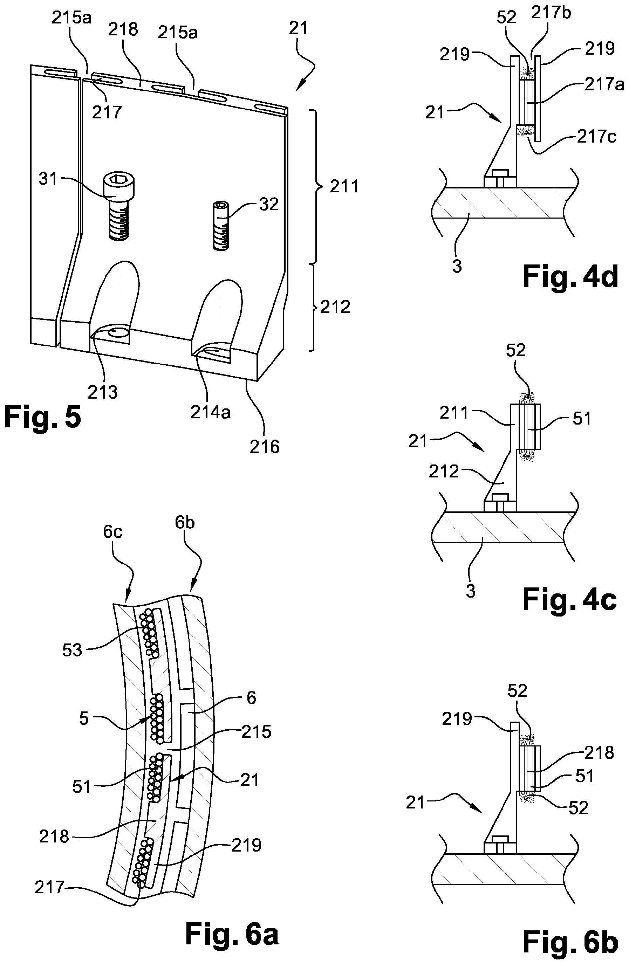

La zone de bobinage 211 d'un élément de stator 21 comporte un évidement 217 dans son épaisseur radiale dans lequel sont agencés les fils 51 électriquement conducteurs des bobinages 5 du stator visible en particulier sur les illustrations des figures 4a et 4b ainsi que sur le détail de la figure 4c.

L'évidement 217 entoure un noyau 218 de la zone de bobinage 211 sur lequel noyau les fils des bobinages prennent appui.

Dans un mode préféré de réalisation, comme illustré sur la figure 4d, l'évidement 217 est avantageusement de largeurs, suivant la direction radiale du stator, différentes en fonction de la position sur la zone de bobinage 211 autour du noyau 218 pour tenir compte du nombre de fils électriquement conducteurs qui trouvent place dans ledit évidement.

Des segments éventuels de l'évidement haut 217b, du côté d'une extrémité libre de la zone de bobinage 211, et bas 217c, du côté du pied 212 de l'élément de stator 21, de l'évidement 217 sont de préférence élargis par rapport à des segments d'évidement médians 217a, au niveau des bords latéraux de la zone de bobinage mitoyens avec les éléments de stator immédiatement voisins, afin de contenir le nombre de fils électriquement conducteurs augmenté dans les zones des chignons 52 des bobinages 5.

Avantageusement, sur au moins une des faces de la zone de bobinage 211, la dimension suivant un périmètre de ladite zone de bobinage est diminuée de sorte à maintenir avec le bord mitoyen de la zone de bobinage du pétale immédiatement voisin un jeu 215a au moins égal et de préférence légèrement supérieur au diamètre des fils des bobinages, comme visible sur les illustrations des figures 2b et 5. Cet espace libre permet de passer les fils devant être placés dans les évidements 217 lors de la réalisation des bobines du stator.

Dans l'exemple de réalisation illustré sur la figure 2b ou sur la figure 4d, les parties de la zone de bobinage 211 qui bordent l'évidement 217 forment des voiles 219 constituant les bords d'une gorge autour du noyau 218 qui maintiennent mécaniquement les fils 51 des bobinages du stator et qui forment des écrans de protection thermique qui limitent la transmission de chaleur par rayonnement depuis les bobinages 5 du stator vers les aimants 6 du rotor qui sont en pratique à faible distance, typiquement un millimètre ou moins pour un moteur de quelques dizaines de centimètres de diamètre.

Les voiles 219, qui sont parties intégrantes des éléments de stator 21, en augmentant la surface de contact entre les fils 51 du bobinage et le matériau bon conducteur thermique de l'élément de stator 21, contact qui peut être amélioré par l'usage d'une pâte de conduction thermique sans charge métallique, favorise également l'évacuation par conduction de la chaleur produite par effet joule dans les fils 51 des enroulements 5.

Comme illustré sur les différentes figures, avantageusement la zone de bobinage 211 est décalée suivant le diamètre du stator 2 par rapport à la semelle de pose 216 ce qui améliore les conditions dans lesquelles sont réalisées les bobines du stator ainsi que les opérations de pose des éléments de fixation 31 et d'assemblage du stator 2 sur l'embase 3.

L'exemple de réalisation décrit en détail et illustré sur les figures 2 à 4 n'est pas limitatif de l'invention qui est susceptible de prendre de nombreuses formes de réalisation en fonction notamment du nombre d'enroulements du moteur, et du nombre de phases du système d'alimentation électrique du moteur, ces paramètres étant des choix réalisés par un concepteur du moteur en fonction de l'application qui doit en être faite.

En fonction des dimensions du moteur réalisé et des dilatations différentielles lors du fonctionnement du moteur, un élément 21 de structure de stator comporte, comme dans l'exemple décrit de manière détaillée, des évidements 217 autour d'un unique noyau 218, ou comporte des évidements autour de deux ou plusieurs noyaux comme dans l'exemple de la figure 5 présentant un élément 21 de structure de stator comportant deux noyaux 218.

Lorsque chaque élément de stator 21 comporte une seule zone de bobinage 211, le nombre d'éléments de stator formant la structure du stator 2 correspond au nombre de pas du moteur, lorsque le moteur est mis en oeuvre comme un moteur pas à pas.

Pour un moteur de dimensions moyennes, quelques dizaines de centimètres en diamètre, cette configuration, dans laquelle chaque élément de stator comporte une seule zone de bobinage et correspond à un nombre d'éléments de stator et à des dimensions desdits éléments de stator satisfaisants les contraintes exposées précédemment, peut comporter plusieurs dizaines voire plusieurs centaines d'éléments de stator, la structure de stator présentée sur la figure 3 illustrant ce principe général.

La fixation des éléments 21 de structure de stator sur l'embase 3 peut être réalisée par tout type de principe qui permet de ne pas introduire de contraintes mécaniques dans les éléments assemblés lors de la dilatation différentielle des éléments entre eux, par exemple des éléments 21 de structure de stator en céramique et une embase 3 en aluminium.

Sur la figure 5, un élément 21 de structure de stator est fixé par une fixation 31 qui assure le positionnement précis au niveau d'un alésage ajusté 213 et un élément anti-rotation 32, laissé en place ou retiré après l'assemblage du stator suivant le cas, qui maintient ledit élément de stator sans bloquer celui-ci dans la direction déterminée par les deux éléments au niveau d'un alésage allongé 214a dans ladite direction (allongement exagéré par rapport au besoin sur le dessin de la figure 5 pour la clarté de l'illustration).

Le rotor 4 du moteur peut également ne comporter des aimants permanents que sur une seule couronne, par exemple la couronne extérieure 6b comme illustré sur la section de la figure 6a, l'autre couronne, dans l'exemple la couronne intérieure 6c, étant réalisée en fer doux.

Dans ce cas, comme illustré sur les figures 6a et 6b, les évidements 217 et des ailes 219 des zones de bobinage 211 peuvent être agencés pour que les dites ailes forment un écran radiatif du rayonnement thermique des bobinages 5 que du seul côté vers lequel se situent les aimants permanents 6 du rotor.

Le cas échéant les fils 51 des enroulements sont avantageusement maintenus sur la zone de bobinage au moyen d'un adhésif tel qu'une résine 53.

Dans un mode de réalisation avantageux, les surfaces des aimants permanents 6 orientées vers les bobinages 5 du stator sont également pourvues d'un écran radiatif, par exemple un revêtement réfléchissant tel qu'une peinture réfléchissante, qui renvoie le rayonnement thermique émis par le stator.

Un moteur conforme à l'invention par le choix adapté des matériaux et des dimensions des différents éléments, en particulier pour limiter la génération de chaleur par effet joules et par des surfaces de contact entre les éléments de stator et l'embase suffisante pour assurer le flux de chaleur à transférer, lorsque l'embase est fixée sur une structure en mesure d'absorber et ou d'évacuer la chaleur produite par le moteur en fonctionnement, a une température interne, en particulier au niveau des aimants permanents, qui est avantageusement maintenue à moins de 380 Kelvin sans la mise en oeuvre d'un refroidissement actif du moteur.

L'ensemble des principes du moteur électrique tels qu'ils viennent d'être décrits est également transposable au cas d'un moteur électrique linéaire.

Dans le cas d'un moteur électrique linéaire à aimants permanents, les aimants sont alignés suivant au moins une rangée et fixés à une structure mobile guidée linéairement au lieu d'être en rotation mais assimilable au rotor du moteur électrique tournant.

L'invention permet de réaliser un moteur électrique à aimants permanents performant délivrant un couple élevé par l'utilisation d'aimants à forte aimantation, sans recourir à un système actif de refroidissement du moteur tout en assurant une température des aimants inférieure à leur température maximale d'utilisation au-dessus de laquelle température la perte de magnétisme des aimants est préjudiciable au fonctionnement efficace du moteur.

## Revendications

1. Moteur électrique (1) à aimants permanents comportant un rotor (4) sur lequel sont fixés des aimants permanents (6) et comportant un stator (2), ledit stator comportant une structure de stator et des bobines (5) agencées sur ladite structure de stator, dans lequel la structure du stator est fractionnée en un ensemble d'au moins trois éléments de stator (21) juxtaposés fixés sur une embase (3), et dans lequel chaque élément de stator (21) :
- comporte au moins une zone de bobinage (211) du côté d'une extrémité libre dudit élément de stator et un pied de fixation (212), du côté d'une extrémité de l'élément de stator opposée à l'extrémité libre, par lequel l'élément de stator est fixé à l'embase (3) ;
- est fixé sur l'embase (3) par le pied de fixation (212) au moyen d'un seul élément de fixation (31) et sans liaison mécanique directe entre les éléments de stator ; le pied de fixation de chaque élément statorique présentant une surface d'appui (216) maintenue en contact avec l'embase (3) par l'élément de fixation (31) unique qui est élargie par rapport à une section de la zone de bobinage (211).

2. - Moteur électrique suivant la revendication 1 lequel chaque élément de stator (21) coopère avec au moins un élément anti-rotation (32) s'opposant à la rotation de l'élément de stator (21) autour de la fixation (31) en autorisant une dilatation différentielle entre ledit élément de stator et l'embase (3).

3. Moteur électrique suivant la revendication 1 ou la revendication 2 dans lequel les éléments de stator (21) sont fixés sur l'embase (3) avec un jeu entre éléments de stator voisins positif ou nul quelle que soit la température interne acceptée du moteur (1) en fonctionnement.

4. Moteur électrique suivant l'une des revendications précédentes dans lequel la zone de bobinage (211) d'un élément de stator (21) comporte un évidement (217) autour d'un noyau (218) dans lequel sont maintenus des fils (51) des bobines (5) du stator, lequel évidement (217) d'une zone de bobinage (211) est d'une largeur supérieure suivant la direction radiale du stator sur des bords supérieur, du côté de l'extrémité libre de l'élément de stator, et inférieur, du côté de l'extrémité de la zone de bobinage située du côté du pied de fixation, que sur des bords latéraux de ladite zone de bobinage.

5. Moteur électrique suivant l'une des revendications précédentes dans lequel au moins un voile (219) de l'élément de stator (21) borde une zone de bobinage (211), ledit voile formant un écran thermique anti-radiatif entre les bobines (5) de ladite zone de bobinage et une couronne d'aimants (6a, 6b) du rotor.

6. Moteur électrique suivant la revendication 4 ou la revendication 5 prise en combinaison avec la revendication 4 dans lequel l'évidement (217) d'une zone de bobinage (211) est une gorge dont des bords correspondent, sur au moins un bord de ladite zone de bobinage, à des voiles (219) situés de part et d'autre des bobines (5).

7. Moteur électrique suivant l'une des revendications précédentes dans lequel, sur au moins une des faces intérieure ou extérieure du stator, un espace (215, 215a) entre deux éléments de stator immédiatement voisins est de largeur au moins égale à un diamètre des fils (51) des bobines (5) agencées sur la structure du stator (2).

8. Moteur électrique suivant l'une des revendications précédentes dans lequel le matériau dans lequel sont réalisés les éléments de stator (21) est un matériau céramique amagnétique et électriquement non conducteur ou faiblement conducteur sélectionné parmi les matériaux céramiques ayant une conduction thermique égale ou supérieure à 80 W/m.K tel qu'un nitrure d'aluminium et de bore ou un nitrure d'aluminium, de préférence de conduction thermique supérieur à 150 W/m.K.

9. Moteur électrique suivant l'une des revendications précédentes dans lequel chaque élément de stator (21) comporte une zone de bobinage (211) unique.

10. Moteur électrique suivant l'une des revendications précédentes dans lequel les éléments de stator (21) sont de formes similaires ou identiques.

11. Moteur électrique suivant l'une des revendications précédentes dans lequel les aimants permanents (6) du rotor (4) sont des aimants dopés au néodyme.

12. Moteur électrique suivant l'une des revendications précédentes comportant un rotor (4) pourvu de deux rangées (6a, 6b) d'aimants permanents entre lesquelles rangées est maintenu le stator (2).

13. Moteur électrique suivant l'une des revendications 1 à 11 comportant un rotor (4) pourvu d'une rangée (6b) d'aimants permanents et d'un voile (6c) en fer doux entre lesquels rangée et voile est maintenu le stator (2).

14. Moteur électrique suivant l'une des revendications précédentes dans lequel une face des aimants permanents en regard du stator est recouverte d'un revêtement réflecteur des radiations thermiques.

15. Moteur électrique suivant l'une des revendications précédentes dans lequel les caractéristiques des éléments de stator (21) et de leurs fixations sur l'embase (3) sont déterminées en fonction des conditions de fonctionnement du moteur de sorte que la température de fonctionnement sans refroidissement actif ou dans un milieu à pression de gaz proche du vide est inférieure à 380 K au niveau des aimants permanents (6).

## Patentansprüche

1. Elektrischer Permanentmagnetmotor (1), einen Rotor (4) beinhaltend, auf dem Permanentmagneten (6) fixiert sind, und einen Stator (2) beinhaltend, wobei der Stator eine Stator-Struktur und Spulen (5) beinhaltet, die auf der Stator-Struktur angeordnet sind, wobei die Struktur des Stators in eine Einheit von mindestens drei nebeneinandergestellten Stator-Elementen (21) segmentiert ist, die auf einer Grundplatte (3) fixiert sind, und wobei jedes Stator-Element (21):
- mindestens eine Wickelzone (211) auf Seiten eines freien Endes des Stator-Elements und einen Fixierfuß (212) auf Seiten eines dem freien Ende gegenüberliegenden Endes des Stator-Elements beinhaltet, durch den das Stator-Element an der Grundplatte (3) fixiert ist;
- auf der Grundplatte (3) durch den Fixierfuß (212) anhand eines einzigen Fixierelements (31) und ohne direkte mechanische Verbindung zwischen den Stator-Elementen fixiert ist;
wobei der Fixierfuß jedes Elements des Stators eine Anlageoberfläche (216) aufweist, die mit der Grundplatte (3) durch das einzige Fixierelement (31) in Kontakt gehalten wird, die im Verhältnis zu einer Sektion der Wickelzone (211) erweitert ist.

2. Elektrischer Motor nach Anspruch 1, wobei jedes Stator-Element (21) mit mindestens einem Verdrehsicherungselement (32) zusammenwirkt, das sich der Drehung des Stator-Elements (21) um die Fixierung (31) entgegensetzt und dabei eine differentielle Ausdehnung zwischen dem Stator-Element und der Grundplatte (3) erlaubt.

3. Elektrischer Motor nach Anspruch 1 oder Anspruch 2, wobei die Stator-Elemente (21) unabhängig von der akzeptierten Innentemperatur des Motors (1) im Betrieb mit einem positiven oder Null-Spiel zwischen benachbarten Stator-Elementen auf der Grundplatte (3) fixiert sind.

4. Elektrischer Motor nach einem der vorstehenden Ansprüche, wobei die Wickelzone (211) eines Stator-Elements (21) eine Ausnehmung (217) um einen Kern (218) beinhaltet, in dem Drähte (51) der Spulen (5) des Stators festgehalten werden, wobei die Ausnehmung (217) einer Wickelzone (211) von einer Breite ist, die in der radialen Richtung des Stators am oberen, auf Seiten des freien Endes des Stator-Elements, und unteren Rand auf Seiten des Endes der Wickelzone, die sich auf Seiten des Fixierfußes befindet, größer ist, als an den seitlichen Rändern der Wickelzone.

5. Elektrischer Motor nach einem der vorstehenden Ansprüche, wobei mindestens eine Umhüllung (219) des Stator-Elements (21) eine Wickelzone (211) einfasst, wobei die Umhüllung einen gegen Strahlung schützenden Hitzeschild zwischen den Spulen (5) der Wickelzone und einem Magnetkranz (6a, 6b) des Rotors bildet.

6. Elektrischer Motor nach Anspruch 4 oder Anspruch 5, in Kombination mit dem Anspruch 4, wobei die Ausnehmung (217) einer Wickelzone (211) eine Nut ist, deren Ränder, an mindestens einem Rand der Wickelzone, Umhüllungen (219) entsprechen, die beiderseits der Spulen (5) situiert sind.

7. Elektrischer Motor nach einem der vorstehenden Ansprüche, wobei auf mindestens einer der Innen- oder Außenseite des Stators ein Raum (215, 215a) zwischen zwei unmittelbar benachbarten Stator-Elementen von einer Breite mindestens gleich einem Durchmesser der Drähte (51) der Spulen (5) ist, die auf der Struktur des Stators (2) angeordnet sind.

8. Elektrischer Motor nach einem der vorstehenden Ansprüche, wobei das Material, aus dem die Stator-Elemente (21) realisiert sind, ein antimagnetisches und elektrisch nichtleitendes oder schwach leitendes keramisches Material ist, das ausgewählt ist aus den keramischen Materialien, die eine thermische Leitfähigkeit gleich oder größer als 80 W/m.K aufweisen, wie ein Aluminium- und Bornitrid oder ein Aluminiumnitrid, vorzugsweise mit einer thermischen Leitfähigkeit größer als 150 W/m.K.

9. Elektrischer Motor nach einem der vorstehenden Ansprüche, wobei jedes Stator-Element (21) eine einzige Wickelzone (211) beinhaltet.

10. Elektrischer Motor nach einem der vorstehenden Ansprüche, wobei die Stator-Elemente (21) von ähnlicher oder identischer Form sind.

11. Elektrischer Motor nach einem der vorstehenden Ansprüche, wobei die Permanentmagneten (6) des Rotors (4) mit Neodym dotierte Magnete sind.

12. Elektrischer Motor nach einem der vorstehenden Ansprüche, einen Rotor (4) beinhaltend, der mit zwei Reihen (6a, 6b) an Permanentmagneten versehen ist, wobei zwischen den Reihen der Stator (2) gehalten wird.

13. Elektrischer Motor nach einem der Ansprüche 1 bis 11, einen Rotor (4) beinhaltend, der mit einer Reihe (6b) von Permanentmagneten und einer Umhüllung (6c) aus weichem Eisen versehen ist, wobei zwischen der Reihe und der Umhüllung der Stator (2) gehalten wird.

14. Elektrischer Motor nach einem der vorstehenden Ansprüche, wobei eine Seite der Permanentmagneten gegenüber dem Stator mit einer die thermische Strahlung reflektierenden Beschichtung überzogen ist.

15. Elektrischer Motor nach einem der vorstehenden Ansprüche, wobei die Merkmale der Stator-Elemente (21) und ihrer Fixierungen auf der Grundplatte (3) in Abhängigkeit von den Betriebsbedingungen des Motors bestimmt werden, sodass die Betriebstemperatur ohne aktive Kühlung oder in einem Milieu mit einem Gasdruck nahe dem Vakuum im Bereich der Permanentmagneten (6) kleiner als 380 K ist.

## Claims

1. Electric motor (1) with permanent magnets comprising a rotor (4) on which permanent magnets (6) are fastened and comprising a stator (2) said stator comprising a stator structure and coils (5) arranged onto said stator structure, in which the stator structure is split into an assembly of at least three juxtaposed stator elements (21), fastened to a baseplate (3) and in which each stator element (21):
- comprises at least one winding area (211) on the side of a free extremity of said stator element and a fastening foot (212) on the side of an extremity of the stator element opposite the free extremity, with which the stator is fastened to the baseplate (3);
- is fastened to the baseplate (3) by the fastener foot (212) by means of a single fastening element (31) and with no direct mechanical linkage between the stator elements;
- the fastening foot of each stator element has a bearing surface (216) that is kept in contact with the baseplate (3) by the single fastener element (31) which is enlarged in relation to a cross-section of the winding area (211).

2. Electric motor according to claim 1, in which every stator element (21) works together with at least one anti-rotation element (32) that prevents the stator element (21) from rotating about the fastener (31) while permitting a differential expansion between said stator element and the baseplate (3).

3. Electric motor according to claim 1 or 2, in which the stator elements (21) are fastened on the baseplate (3) with a positive or zero gap between neighboring stator elements, irrespective of the acceptable internal temperature of the motor (1) while in operation.

4. Electric motor according to one of the preceding claims, in which the winding area (211) of a stator element (21) comprises a recess (217) around a core (218), in which wires (51) of the stator windings (5) are maintained, the width of which recess (217) of a winding area (211) is greater, in the radial direction of the stator, on upper edges, on the side of the free extremity of the stator element, and on lower edges, on the side of the winding area extremity located on the side of the fastener foot, than it is on the lateral edges of said winding area.

5. Electric motor according to one of the preceding claims, in which at least one runout (219) of the stator element (21) borders a winding area (211), said runout forming an anti-radiative heat screen between the coils (5) of said winding area and a crown of magnets (6a, 6b) of the rotor.

6. Electric motor according to claim 4 or claim 5, taken in combination with claim 4, in which the recess (217) of a winding area (211) is a channel, some of whose edges correspond, over at least one edge of said winding area, to runouts (219) located on either side of the coils (5).

7. Electric motor according to one of the preceding claims, in which, over at least one of the inner or outer sides of the stator, the width of a space (215, 215a) between two immediately neighboring stator elements is at least equal to a diameter of the wires (51) of the coils (5) installed on the stator (2) structure.

8. Electric motor according to one of the preceding claims, in which the material of which the stator elements (21) are made is a non-magnetic and electrically non-conducing or low-conductivity ceramic material chosen from ceramic materials with a thermal conduction higher than or equal to 80 W/m.K, such as an aluminum and boron nitride or aluminum nitride, whose thermal conduction is preferably higher than 150 W/m.K.

9. Electric motor according to one of the preceding claims, in which each stator element (21) comprises a single winding area (211).

10. Electric motor according to one of the preceding claims, in which the stator elements (21) have a similar or identical shape.

11. Electric motor according to one of the preceding claims, in which the permanent magnets (6) of the rotor (4) are neodymium magnets.

12. Electric motor according to one of the preceding claims, which comprises a rotor (4) with two rows (6a, 6b) of permanent magnets, between which rows the stator (2) is maintained.

13. Electric motor according to one of claims 1 to 11, which comprises a rotor (4) with one row (6b) of permanent magnets and a soft iron runout (6c) between which row and runout the stator (2) is maintained.

14. Electric motor according to one of the preceding claims, in which one side of the permanent magnets opposite the stator is covered with a coating that reflects heat radiations.

15. Electric motor according to one of the preceding claims, in which the characteristics of the stator elements (21) and of their fastenings to the baseplate (3) are determined according to the operating conditions of the motor, such that the operating temperature without active cooling or in a medium with a gas pressure close to vacuum is below 380 K around the permanent magnets (6).
